# EUROPEAN PATENT APPLICATION

(11) **EP 4 741 792 A1**
(43) Date of publication of application: **13.05.2026**
(21) Application number: 24212070.7
(22) Date of filing: 11.11.2024
(51) Int. Cl.: G01M 17/02

(54) **TESTING APPARATUS FOR ESTIMATING PARAMETERS CORRELATED TO THE INTERACTION BETWEEN A TYRE AND A SURFACE**

(71) Applicant: Pirelli Tyre S.p.A., 20126 Milano (IT)
(72) Inventor: KLING, Konstantin Peter, 64747 Breuberg (DE)
(74) Representative: Porta & Consulenti Associati S.p.A.

(57) **Abstract**

A testing apparatus (10) for estimating parameters correlated to the interaction between a tyre and a surface. The testing apparatus (10) comprises an annular drum (20) rotatable about a drum rotation axis (X) and having a radially inner surface (21), a first driving device (30) configured to drive in rotation the annular drum (20) about the drum rotation axis (X), a tyre test sample (100) arranged on said radially inner surface (21) and a second driving device (40) configured to drive in rotation the tyre test sample (100) on the radially inner surface (21) of the annular drum (20) under controlled running conditions. The first driving device (30) has a rotation axis (Y) extending in a radially outer position with respect to the annular drum (20), so as to be able to access the annular drum (20) from the opposite side thereof.

## Description

The present invention relates to a testing apparatus for estimating parameters correlated to the interaction between a tyre and a surface.

The testing apparatus of the invention is intended to be used in laboratories or plants of tyre manufacturers and/or suppliers of compound recipes for tyres.

Tyres manufacturers or the abovementioned suppliers typically perform tests where real road surface conditions and real driving conditions are simulated in order to evaluate the behavior of tyres or of chemical compounds for tyres under such simulated real conditions. Critical parameters such as traction, wear, rolling resistance, noise etc. are evaluated during the tests or afterwards by proper sensors and suitable data acquisition systems.

These tests are very helpful in tyre research and development as they finally allow manufacturers to evaluate tyre longevity and performance and optimize tyre design, so as to meet high safety and quality standards.

More generally, the testing apparatus of the invention can be used by anyone involved in testing the interaction between a material/tyre and a surface, thus also by legal testing institutes or departments, universities, or independent testing facilities, for example in the context of the Euro 7 standard which sets new emission regulations for vehicles in the European Union.

### PRIOR ART

Different types of tyre testing apparatus are known. Some known tyre testing apparatuses are configured to perform tests on full-scale tyres. Other known tyre testing apparatus are configured to perform tests on small-scale tyres or rubber-like specimens.

An example of testing apparatus configured to carry out tests on full-scale tyres is described in DE102020213795A1. This apparatus comprises a rotatable drum having an inner surface on which eight track segments are detachably fastened. The inner faces of the track segments form a rolling surface where a tyre is made to rotate. Seven of the eight track segments are road segments with a conventional asphalt coating on their inner faces. Alternatively, the track segments can be made of aluminum and their inner faces are provided with abrasive elements in order to obtain an asphalt roadway. The tyre is mounted on a wheel support which can be subjected to different forces and can be set to different slip angles during the test. Different loads can be applied to the wheel support to simulate vehicles having different weights.

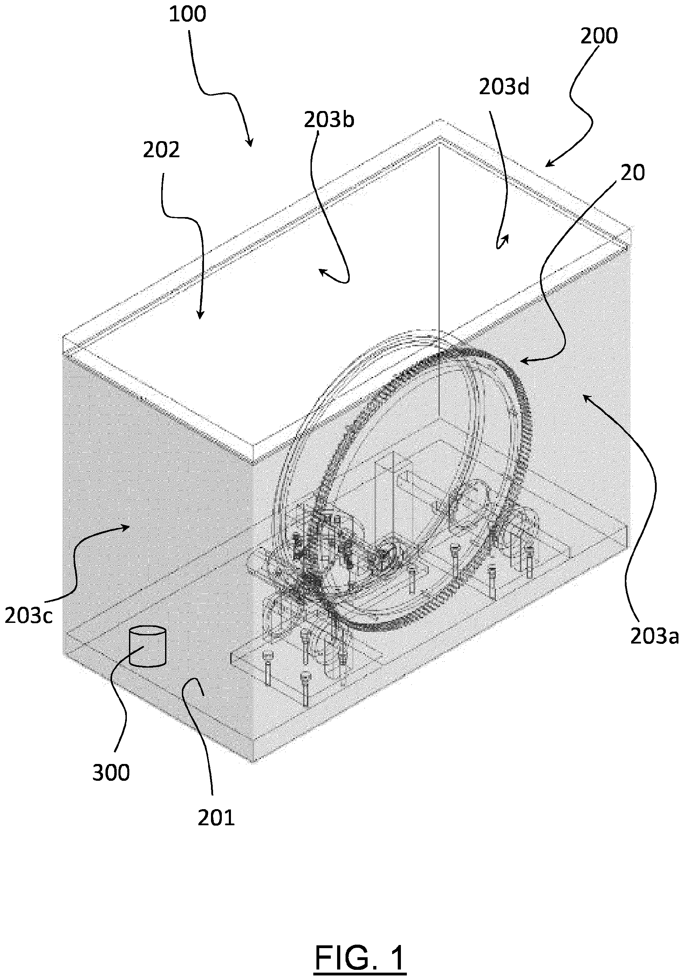

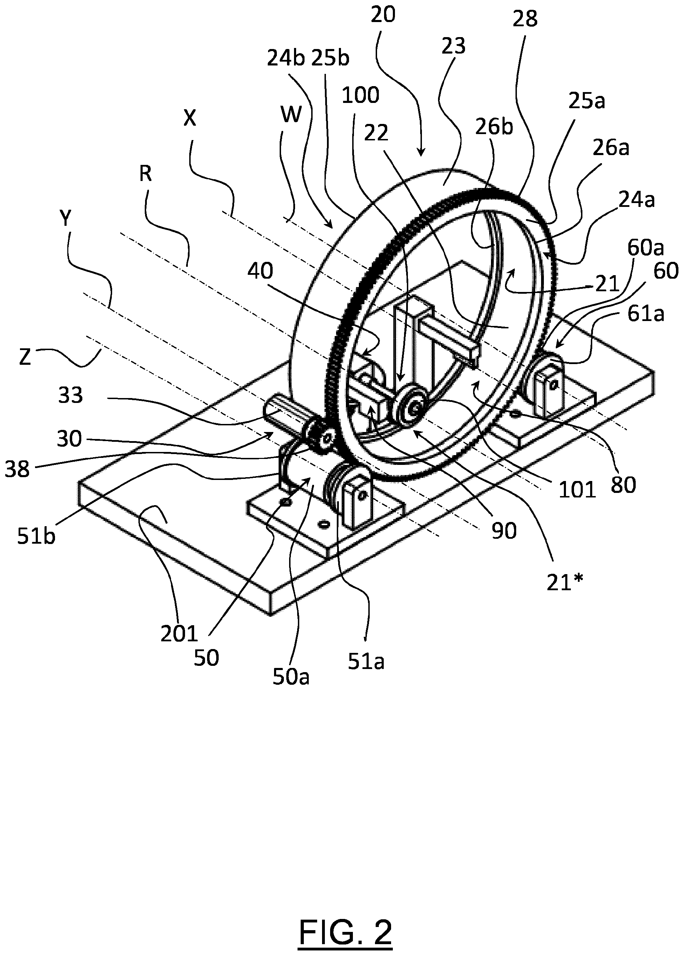

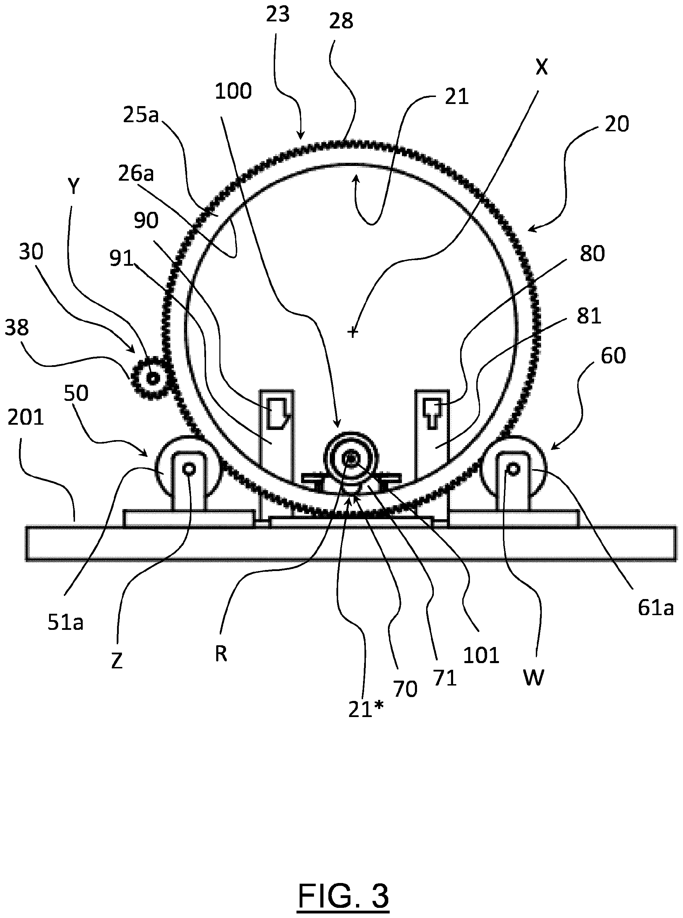

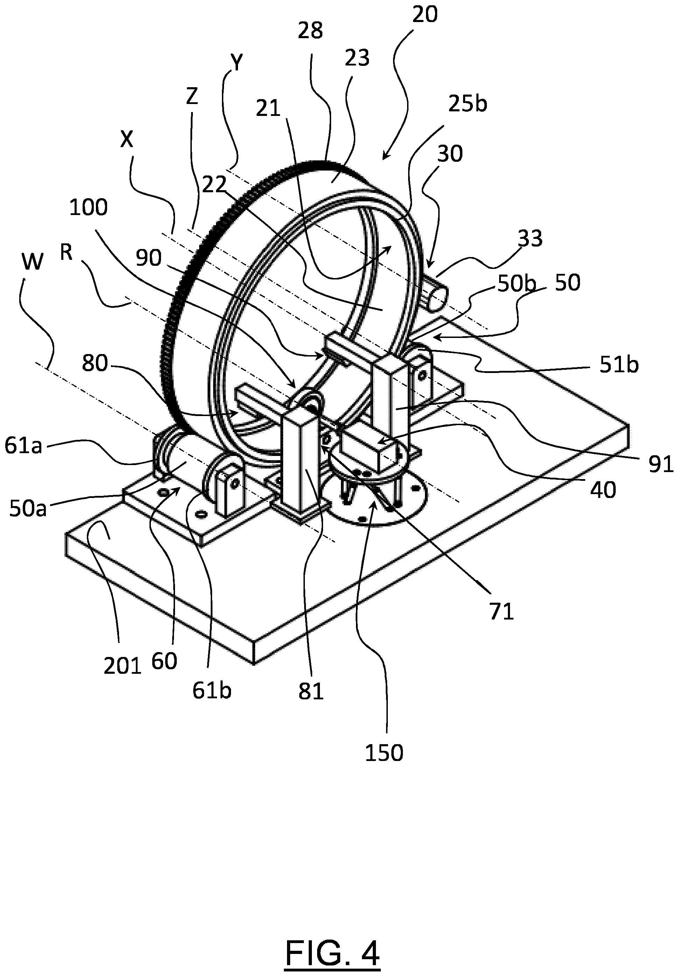

DE2611123B1 describes different embodiments of a testing apparatus configured to carry out wear tests on test pieces consisting on miniature tyres or rubber-like specimens. In a first embodiment, the test piece is made to rotate on the outer surface of a rotatable drum (see Fig. 1). In another embodiment, the test piece is made to rotate on the inner surface of a rotatable annular drum (see Fig. 2). In a further embodiment, the test piece is made to rotate on a top surface of a rotatable disc having a rotation axis orthogonal to the rotation axis of the test piece (see Figs. 3 and 5). In still another embodiment, the test piece is made to rotate on an endless belt (see Fig. 4).

### SUMMARY OF THE INVENTION

In this description and in the subsequent claims, the following definitions apply.

The term "tyre test sample" is used to indicate:
- a sample of a full-scale tyre or a small-scale (or miniaturized) tyre whose tread band is made of an elastomeric material identical to that of the tyre to be tested, or
- a small-scale (or miniaturized) tyre whose tread band is made of an elastomeric material identical to that of the tyre to be tested, or
- a disk-shaped test specimen comprising, on the radially outer surface thereof, an annular strip made of an elastomeric material identical to that of the tread band of the tyre to be tested.

The term "radial" and the expressions "radially inner" and "radially outer" are used with reference to a direction substantially perpendicular to a rotation axis of the tyre test sample or of an annular drum. "Radially inner" means closer to the rotation axis along said direction, while "radially outer" means farther the rotation axis along said direction.

The term "axial" is used with reference to a direction substantially coinciding with, or substantially parallel to, the rotation axis of said tyre test sample or of said annular drum.

The term "controlled running conditions" is used to indicate specific conditions defined in the testing apparatus to simulate actual running conditions of a tyre test sample on a surface. Such specific conditions are defined upon imparting on the tyre test sample predetermined mechanical stresses (such as a predetermined vertical load and/or a predetermined traction force and/or a predetermined braking force and/or a predetermined lateral force) and/or predetermined angles (such as a predetermined slip angle and/or a predetermined cornering angle and/or a predetermined camber angle and/or a predetermined toe angle).

In addition or in alternative to the above, the abovementioned predetermined conditions can be also defined upon setting specific environment conditions to simulate actual environment conditions (such as humidity, temperature, pressure) and/or upon setting specific conditions on the running surface to simulate actual conditions of a surface to be traveled by the tyre (such as wet surface or snowy surface or icy surface or overheated surface or cold surface or dry surface). Dust and/or debris (for example little stones, loose gravel, sand, or leaves) can be provided on the running surface if desired.

The abovementioned surface can be any kind of surface intended to be travelled by a tyre, namely asphalt (Hot mix Asphalt, Warm Mix Asphalt, Cold Mix Asphalt), concrete (Plain Concrete, Reinforced Concrete, Precast Concrete, Pervious Concrete), gravel (Crushed Stone, Natural Gravel, Stabilized Gravel), soil (Unpaved Dirt Roads, Stabilized Soil Roads), brick (Traditional Brick Paving, Modern Interlocking Brick), cobblestone (Natural Stone, Cut Stone), composite (Asphalt Overlays, Concrete Overlays), rubberized surface (Rubberized Asphalt, Recycled Tire Surfaces), specialty surfaces (Chip Seal, Slurry Seal, Micro-surfacing), grass pavers, plastic grid systems, sandpaper, safety walk (Corundum), or a combination thereof. Just for simplicity of description, hereinafter reference will be made often to a "road surface".

The term "footprint" is used to indicate the portion of the tyre test sample that is in contact with the road surface upon having applied to the tyre test sample a predetermined vertical load, and/or stresses having a vertical/normal force component.

The Applicant observed that in testing apparatuses where the tyre test sample is arranged on the top surface of a rotatable disk, as for example in the embodiments of Figs. 3 and 5 of DE2611123B1, a slip angle is inevitably present into the tyre test sample's footprint in operation (that is when both the tyre test sample and the rotatable disk rotate) because of the curvature of the top surface of the rotatable disk. An artificial slip angle is present in operation even when the tyre test sample is positioned onto the rotatable disk with no slip angle.

The Applicant thought that such a slip angle inevitably alters the reliability of the parameters collected by the testing apparatus.

Accordingly, the Applicant focused its attention to testing apparatuses wherein the tyre test sample is made to rotate on a rotatable drum. The Applicant realized that in this case no slip angles are present into the tyre test sample's footprint in operation.

However, the Applicant observed that in conventional testing apparatuses where the tyre test sample is made to rotate on the radially outer surface of the rotatable drum, as for example in the embodiment of Fig. 1 of DE2611123B1, if full-scale tyres are used as tyre test sample, the testing apparatus would be very bulky and very large in size, whereas if small-scale tyres or small disk-shaped test specimens are used as tyre test sample the tyre test sample's footprint would not be realistic due to the small diameter of the tyre test sample.

Accordingly, the Applicant decided to finally focus its attention to testing apparatuses wherein the tyre test sample is made to rotate on the radially inner surface of a rotatable annular drum.

The Applicant observed that such apparatuses, as for example the one shown in Fig. 2 of DE2611123B1, the annular drum is driven in rotation by a driving device arranged behind the annular drum at the geometrical center axis thereof. This arrangement has the drawback that the annular drum is accessible from one side only, namely from the opposite side to the one where the abovementioned driving device is placed. Such a limited accessibility is a problem in those cases where, as often happens, different devices or instruments should be positioned close to the annular drum or in the radially inner area of the annular drum in order to simulate as best as possible real road surface conditions and real driving conditions. In these cases an access to the annular drum from the same side where the driving device is arranged would be possible only upon dismounting or removing the driving device.

This drawback is even heavier in those cases where the tyre test sample is a full-scale tyre. In these cases the driving device is very bulky and heavy and dismounting or removing the driving device can be difficult.

The Applicant perceived that in order to overcome the above drawback a testing apparatus which provides for a two-side accessibility to the annular drum would be highly desirable.

The Applicant thought that such a two-side accessible apparatus would also lead to an increase of possibility for automatization and to a decrease of setup time.

The Applicant found that such a desired two-side accessibility can be obtained if the rotation axis of the drum driving device extends in a radially outer position with respect to the annular drum. This leads the drum driving device not to be arranged behind the annular drum at the geometrical center axis of the annular drum, thus leaving full accessibility to the annular drum from both the opposite sides thereof.

The present invention relates to a testing apparatus for estimating parameters correlated to the interaction between a tyre and a surface.

Preferably, the testing apparatus comprises an annular drum rotatable about a drum rotation axis.

Preferably, the annular drum comprises a radially inner surface.

Preferably, the testing apparatus comprises a first driving device configured to drive in rotation the annular drum about the drum rotation axis.

Preferably, the first driving device comprises a rotation axis.

Preferably, the rotation axis of the first driving device extends in a radially outer position with respect to the annular drum.

Preferably, the testing apparatus comprises a tyre test sample.

Preferably, the tyre test sample is arranged on said radially inner surface.

Preferably, the testing apparatus comprises a second driving device configured to drive in rotation the tyre test sample on said radially inner surface.

Preferably, the tyre test sample rotates on said radially inner surface under controlled running conditions.

The testing apparatus of the invention allows performing tests where real road surface conditions and real driving conditions are effectively simulated.

Having provided the rotation axis of the drum driving device in a radially outer position with respect to the annular drum, the desired two-side accessibility is achieved irrespective of the tyre test sample to be used and of the size thereof. A substantially 360° free space is obtained on each of the opposite sides of the annular drum, which allows for a great number of devices or instruments to be installed without any interferences with the drum driving device. A high possibility for automatization is also achieved and the setup of the testing apparatus in both the cases of first installation intervention and maintenance intervention is speeded up.

The present invention may have at least one of the preferred features described below.

The tyre test sample can be a sample of a full-scale tyre.

However, since the Applicant observed that the parameters correlated to the interaction between a tyre and a road surface are influenced by the material of the tyre tread band and the running conditions and not also by the size of the tyre test sample, the Applicant thought that, for economic reasons and structural and procedural simplicity, it is preferable to use as tyre test sample a small-scale tyre whose tread band is made of an elastomeric material identical to that of the tyre to be tested, or a disk-shaped test specimen comprising, on the radially outer surface thereof, an annular strip made of an elastomeric material identical to that of the tread band of the tyre to be tested. Consequently, the annular drum can have a very small diameter and the testing apparatus can be a small-size apparatus to be placed for example on a desk or workbench.

The parameters estimated by the testing apparatus of the invention are tyre reactional parameters correlated to force and/or moments/torques acting on the tyre while running on the surface (longitudinal forces and/or lateral forces and/or vertical/normal forces, and/or rolling resistance moment and/or lateral rolling moment and/or aligning torques), like for example wear, rolling resistance, durability at high speed, noise, speed. In general, all those parameters which are believed to be useful for deeply and completely study the interaction between a tyre and a road surface can be estimated by the testing apparatus of the invention.

In preferred embodiments, the tyre test sample is a small disk-shaped test specimen, more preferably a Grosch wheel.

Preferably, the tyre test sample is removably mounted on a wheel support connected to the second driving device. Accordingly, the tyre test sample can be quickly replaced when desired.

In preferred embodiments, the radially inner surface of the annular drum is an abrasive surface, so that at least some of the parameters estimated by the testing apparatus of the invention are correlated to the wear of the tyre.

Preferably, the radially inner surface of the annular drum is replaceable, so that it can be quickly renewed or changed when desired.

The Applicant thought that it is advisable performing several tests under the same running condition, each time replacing the tyre test sample and renewing the radially inner surface of the annular drum, in order to compare the results in the different tests and have a confirmation of such results.

The Applicant also thought that it is advisable to change the tyre test sample and to renew the radially inner surface of the annular drum when tests under different running conditions must be performed in order to avoid the collected parameters to be influenced by previous tests.

Preferably, the first driving device rotates about its rotation axis in a rotation direction opposite the rotation direction of the annular drum about the drum rotation axis.

Preferably, the first driving device is fixed to a support base or mounted on a sled or rail. In the latter case the first driving device can be moved away from and close to the annular drum during setup or maintenance interventions.

The second driving device can be free rolling, i.e. an idle driving device simply configured to maintain the tyre test sample on the radially inner surface of the annular drum and driven by the rotation of the annular drum.

Preferably, the second driving device is a motorized driving device, i.e. a driving device configured to drive the tyre test sample with a predetermined rotation speed which can be equal to, less than or greater than the rotation speed of the annular drum.

The second driving device can be fixed to the support base or mounted on sled or rail. In the latter case the second driving device can be moved away from and close to the annular drum during setup or maintenance interventions.

Preferably, the second driving device is arranged close to the lower portion of the annular drum, so as to leave ample free space for accessing the annular drum also from the side where the second driving device is placed.

Preferably, the annular drum comprises, on the radially inner surface thereof, an annular track.

Preferably, the tyre test sample is arranged on said annular track.

Preferably, the annular track is made of an abrasive material.

Preferably, the annular track is removable and replaceable, so that the surface on which the tyre test sample is made to rotate in operation can be quickly renewed or changed when desired.

In some embodiments, the annular track is defined by a plurality of plate or stripe elements attached to the radially inner surface of the annular drum.

Preferably, said plate or stripe elements are arranged one after the other or side-by-side along the radially inner surface of the annular drum.

In another embodiments, the annular track is defined by a continuous strip attached to the radially inner surface of the annular drum.

Preferably, a hexapod is connected to the second driving device. The hexapod allows the tyre test sample to be driven along any directions and angles and to take any positions on the radially inner surface of the annular drum.

The hexapod can be fixed to a support base or mounted on a sled or rail. In the latter case the hexapod can be moved away from and close to the annular drum during setup or maintenance interventions.

In place of the hexapod distinct devices can be used to drive the tyre test sample along different directions and angles, like for example sleds and/or rails. Such distinct devices can be driven in turn by a hydraulic or pneumatic cylinder.

Preferably, the first driving device comprises, on a radially outer surface thereof, a first annular gear.

Preferably, the annular drum comprises, on a radially outer surface thereof, a second annular gear.

Preferably, the first annular gear and the second annular gear are mutually engaged. An effective motion transmission from the first driving device to the annular drum with a predefined and fixed rotation ratio is thus achieved, with no risk of slippages between first driving device and annular drum.

The first annular gear can extend along the whole axial extension of the first driving device.

Preferably, the first annular gear extends axially for only part of the radially outer surface of the first driving device.

The second annular gear can extend along the whole axial extension of the annular drum.

Preferably, the second annular gear extends axially for only part of the radially outer surface of the annular drum.

In some embodiments, a belt or a chain is provided to connect the first driving device and the annular drum, irrespective of the provision or not of the first annular gear and/or the second annular gear.

In other embodiments, the first driving device and the annular drum are devoid of the first and second annular gears and the motion transmission is transferred from the first driving device to the annular drum just by a press-contact coupling between the radially outer surface of the first driving device and the radially outer surface of the annular drum.

Preferably, a first rolling bearing is provided.

Preferably, the first rolling bearing is in contact with the radially outer surface of the annular drum.

Preferably, the first rolling bearing has a rotation axis extending in a radially outer position with respect to the annular drum, so as not to hinder the desired accessibility to the annular drum from both sides thereof.

Preferably, the first rolling bearing is fixed to the support base.

Alternatively, the first rolling bearing is mounted on a rail. In the latter case the first rolling bearing can be moved away from and close to the annular drum during maintenance interventions.

In some embodiments, the first rolling bearing is motorized. In these cases the first rolling bearing defines the abovementioned first driving device and what stated above with respect to the first driving device fully applies to the first rolling bearing.

Preferably, the first rolling bearing contacts a first lower portion of the radially outer surface of the annular drum, so as to remain totally or almost totally within the plan footprint of the annular drum and keep the overall size of the testing apparatus as small as possible.

Preferably, the first rolling bearing substantially does not project laterally with respect to the annular drum.

Preferably, the first rolling bearing comprises first axially opposed shoulders.

Preferably, said first axially opposed shoulders are in abutment against opposed axial surfaces of the annular drum. Thanks to this abutment axial movements of the annular drum in operation are prevented.

Preferably, a second rolling bearing is provided.

Preferably, the second rolling bearing is in contact with the radially outer surface of the annular drum.

Preferably, the second rolling bearing is arranged on the opposite side of the first rolling bearing with respect to the annular drum, so as to cooperate with the first rolling bearing in preventing any movement of the annular drum in operation along a direction perpendicular to the drum rotation axis.

Preferably, the second rolling bearing has a rotation axis extending in a radially outer position with respect to the annular drum, so as not to hinder the desired accessibility to the annular drum from both sides thereof.

Preferably, the second rolling bearing is fixed to the support base.

Alternatively, the second rolling bearing is mounted on a rail. In the latter case the second rolling bearing can be moved away from and close to the annular drum during maintenance interventions.

Preferably, the second rolling bearing contacts a second lower portion of the radially outer surface of the annular drum, so as to remain totally or almost totally within the plan footprint of the annular drum and keep the overall size of the testing apparatus as small as possible.

Preferably, the second rolling bearing substantially does not project laterally with respect to the annular drum.

Preferably, the annular drum stands on the first rolling bearing and the second rolling bearing.

Preferably, the second rolling bearing comprises second axially opposed shoulders.

Preferably, said second axially opposed shoulders are in abutment against the opposed axial surfaces of the annular drum. This abutment contributes to prevent axial movements of the annular drum in operation.

In some embodiments, in addition to the abovementioned first axially opposed shoulders and/or second axially opposed shoulders or in place of at least one of them, a pair of axial bearings arranged on axially opposite sides of the annular drum is provided to prevent axial movements of the annular drum in operation.

Preferably, the axial bearings are in abutment against the opposed axial surfaces of the annular drum.

Preferably, the axial bearings are fixed to the support base.

Preferably, the axial bearings are arranged between the first rolling bearing and the second rolling bearing.

Preferably, the annular drum comprises axially opposed annular shoulders.

Preferably, the axially opposed annular shoulders project toward the drum rotation axis, i.e. they have a radially inner diameter less than the diameter of the radially inner surface of the annular drum.

Preferably, the radially inner surface of the annular drum is arranged between the axially opposed annular shoulders.

These shoulders allow possible water, dust, debris etc. to be maintained on the radially inner surface of the annular drum also thanks to the centrifugal force acting on the annular drum in operation.

Preferably, at least one abutment member is in contact with the annular drum to avoid vertical movements of the annular drum in operation.

Preferably, the at least one abutment element comprises an abutment wheel in contact with a lowermost portion of the radially inner surface of the annular drum. The position of the abutment wheel is such that ample free space for accessing the annular drum, also from the side where the abutment wheel is provided, is left.

Preferably, the abutment wheel is an idle wheel.

Preferably, the abutment wheel is supported by a vertical plate arranged at a side of the lower portion of the annular drum.

Preferably, one of the axially opposed annular shoulders of the annular drum is arranged between the abutment wheel and said vertical plate to clamp the annular drum therebetween.

In addition to, or in place of, the abovementioned abutment wheel at least one additional bearing is provided to avoid vertical movements of the annular drum, the least one additional bearing being in contact with an upper portion of the outer surface of the annular drum. For example, a first additional bearing can be provided at the upper portion of the outer surface of the annular drum above the first rolling bearing and a second additional bearing can be provided at the upper portion of the outer surface of the annular drum above the second rolling bearing.

Preferably, at least one further device is arranged in a radially inner position of the annular drum to supply specific elements on the radially inner surface of the annular drum and/or to remove specific elements from the radially inner surface of the annular drum in order to set specific conditions on the running surface which simulate actual conditions of a surface to be traveled by the tyre.

The at least one further device can be one or more devices selected from the following list: a suction device, a water or snow supply device, a dust/debris supply device, a rake device configured to remove possible debris, a laser device for cleaning purposes, a device configured to renew the roughness of the radially inner surface of the annular drum.

Preferably, the at least one further device is supported by a respective supporting member arranged, with respect to the annular drum, at the same side where the second driving device is arranged. This is possible thanks to the fact that the first driving device is arranged in a radially outer position with respect to the annular drum.

Appropriate members are provided close to the annular drum and at the same side of the supporting member to supply the abovementioned specific elements to the at least one further device or remove the abovementioned specific elements from the at least one further device.

Preferably, a camera pointing at the radially outer surface of the tyre test sample is provided.

This camera can be incorporated in the annular drum or arranged in an outer position with respect to the annular drum or, preferably, in a radially inner position of the annular drum. In the first case, the camera is arranged within the annular drum, i.e. between the radially inner surface and the radially outer surface thereof, and the radially inner surface of the annular drum comprises, at the camera, a transparent surface portion.

Preferably, the camera comprises a shutter which opens periodically with a predetermined shutter frequency depending on the rotation speed of the annular drum or of the tyre test sample. The shutter frequency matches the rotation speed of the annular drum when the camera is incorporated in the annular drum, while the shutter frequency matches the rotation speed of the tyre test sample when the camera is arranged in an outer position with respect to the annular drum or in a radially inner position of the annular drum.

Preferably, a flash light source is provided.

Preferably, the flash light source is configured to emit flash light with a frequency matching the shutter frequency of the camera.

In some embodiments, i. e. when the camera is arranged in an outer position with respect to the annular drum or, preferably, in a radially inner position of the annular drum, the camera is supported by a respective supporting member arranged, with respect to the annular drum, at the same side where the second driving device is arranged. This is possible thanks to the fact that the first driving device is arranged in a radially outer position with respect to the annular drum.

Preferably, an outer case is provided to define a closed environment.

Preferably, all the above described features of the testing apparatus are arranged within the outer case. In the case specific elements like for example water etc. are added to the radially inner surface of the annular drum specific elements in order to set specific conditions on the running surface, the outer case avoids these specific elements to contact possible persons which are close to the testing apparatus in operation.

Preferably, the outer case comprises the abovementioned support base.

Preferably, the outer case comprises a plurality of walls.

Preferably, said walls are associated with the support base.

In some embodiments, the support base is square or rectangular-shaped.

In these embodiments, four walls can be associated with the square or rectangular shaped support base to define a cube or parallelepiped shaped box.

Preferably, at least one wall of said plurality of walls comprises at least one portion made of a transparent material, so as to allow a visual access within the outer case.

Preferably, when the testing apparatus is a small-size apparatus, said at least one wall is transparent. In some embodiments, all said walls are transparent.

Preferably, when the testing apparatus is a full-size apparatus, said at least one portion is made of glass or plastic material.

The remaining portion of said at least one of said walls can be made of a non transparent material, e.g. of metal plated. In this case the transparent portion defines a window in the wall which allows visual access within the outer case.

In some embodiments, like for example when the presence of persons close to the testing apparatus is not allowed or suggested for security reasons (like for example when the temperature within the outer case is too low), the visual access within the outer case can be obtained through a camera.

In some embodiments, at least one additional device configured to provide a controlled climate inside the outer case can be provided. Humidity, ambient temperature and/or pressure can be controlled by the at least one additional device.

Measuring devices can also be provided in order to check the quality of the radially inner surface of the annular drum and/or of the radially outer surface of the tyre test sample and/or the quantity and/or height of specific elements like for example water etc. provided on the radially inner surface of the annular drum in order to set specific conditions on the running surface.

In some embodiments, an external brake mechanism is provided for emergency stopping and/or slowing down the rotation of the annular drum about the drum rotation axis.

The external brake mechanism can be configured to couple with the annular drum or with the first driving device when activated. It provides for a frictional force that acts directly or indirectly onto the annular drum for stopping or braking the rotation annular drum.

Preferably, the external brake mechanism comprises a disk brake or a pushing brake pad configured to couple with the annular drum.

Preferably, the disk brake comprises a brake caliper configured to couple with the radially outer surface of the annular drum or a cylinder pushing pad configured to axially press against the annular drum. In the case of the disk brake, the brake caliper is arranged at a radially outer position with respect to the annular drum or to a disk fixedly connected to the annular drum at a side thereof, and the brake caliper is configured to clamp the annular drum or the abovementioned disk for stopping and/or slowing down the rotation of the annular drum.

### DETAILED DESCRIPTION OF EMBODIMENTS OF THE INVENTION

Further characteristics and advantages of the tyre of the present invention will become clearer from the following detailed description of preferred embodiments thereof, made with reference to the appended drawings. In such drawings:
- Figure 1 is a schematic perspective view of a preferred exemplary embodiment of the testing apparatus of the invention;
- Figure 2 is a schematic perspective front view of a detailed part of the testing apparatus of figure 1;
- Figure 3 is a front elevation view of the detailed part of figure 2;
- Figure 4 is a schematic perspective rear view of the detailed part of figure 2.

In figure 1, a testing apparatus according to the present invention is indicated with reference numeral 100.

The testing apparatus 100 comprises an outer case 200 which defines a closed environment.

In the exemplary embodiment of figure 1, the outer case 200 has a parallelepiped shape.

The outer case 200 comprises a support base 201, a top wall 202 and four lateral, namely a front wall 203a, a rear wall 203b, a first side wall 203c and an opposite side wall 203d.

The top wall 202 and the four lateral walls 203a, 203b, 203d and 203d are connected to each other to define an assembly which is configured to be removably associated with the support base 201 to form a closed box.

In the exemplary embodiment of figure 1, the front wall 203a, the rear wall 203b, the first side wall 203c and the opposite side wall 203d are all transparent. Preferably, they are made of glass or plastic material.

Furthermore, a device 300 is arranged inside the outer case 200 to provide a controlled climate within the outer case 200. The device 300 can control the humidity and/or the ambient temperature and/or the pressure inside the outer case 200.

In the exemplary embodiment of figure 1, the outer case 200 has a small size so as that the testing apparatus 100 can be placed on a desk or workbench of a laboratory. For example, the outer case 200 has the following maximum dimensions: 1000 mm x 1000 mm x 1000 mm.

An annular drum 20 is arranged inside the outer case 200.

As shown in figures 2 to 4, the annular drum 20 is rotatable about a drum rotation axis X and comprises a radially inner surface 21, a radially outer surface 23 and two opposed axial surfaces 24a, 24b.

As shown in figures 2 and 4, an annular track 22 is preferably provided on the radially inner surface 21.

Preferably, the annular track 22 is made of an abrasive material.

The annular track 22 can comprise a plurality of removable and replaceable plate or stripe elements (not shown) attached to the radially inner surface 21 of the annular drum 20 and arranged one after the other or side-by-side along said radially inner surface 21 or by a removable and replaceable continuous strip (not shown) attached to said radially inner surface 21.

As shown in figures 2 to 4, an annular gear 28 is provided on the radially outer surface 23 of the annular drum 20. The annular gear 28 extends axially for only part of the radially outer surface 23.

Two axially opposed annular shoulders 25a, 25b are provided at the two opposed axial surfaces 24a, 24b of the annular drum 20.

The annular shoulder 25a, 25b are arranged on the opposite sides of the radially inner surface 21 and project from the radially outer surface 23 toward the drum rotation axis X.

Each of the annular shoulder 25a, 25b has a respective radially inner free annular end 26a, 26b closer to the drum rotation axis X than the radially inner surface 21, i.e. the diameter at each of the radially inner free annular ends 26a, 26b is less than the diameter at the radially inner surface 21.

The annular drum 20 stands on two opposite rolling bearings 50, 60 without contacting the support base 201. The rolling bearings 50, 60 are arranged on the opposite sides of the annular drum 20 and are fixedly attached to the support base 201.

Each of the rolling bearings 50, 60 is rotatable about a respective rotation axis Z, W extending in a radially outer position with respect to the annular drum 20 along respective directions parallel to each other and parallel to the drum rotation axis X.

Each of the rolling bearings 50, 60 comprises a respective cylindrical body 50a, 60a extending about the respective rotation axis Z, W and contacting a respective lower portion of the radially outer surface 23 of the annular drum 20.

Each of the rolling bearings 50 and 60 further comprises two axially opposed shoulders 51a, 51b and 61a, 61b arranged on the opposite sides of the respective cylindrical body 50a, 60a.

The shoulders 51a and 61a abut against the axial surface 24a of the annular drum 20, while the shoulders 51b and 61b abut against the axial surface 24b of the annular drum 20.

The rolling bearings 50, 60 do not project laterally with respect to the annular drum 20.

The annular drum 20 is driven in rotation about the drum rotation axis X by a driving device 30.

While not shown in the herewith attached figures, the driving device 30 is fixedly attached to the support base 201.

The driving device 30 has a rotation axis Y extending in a radially outer position with respect to the annular drum 20 along a direction parallel to the drum rotation axis X and rotates about the rotation axis Y in a rotation direction opposite the rotation direction of the annular drum 20 about the drum rotation axis X.

As shown in figures 2 and 3, the driving device 30 comprises, on the radially outer surface 33 thereof, an annular gear 38 engaging the annular gear 28 of the annular drum 20. The annular gear 38 extends axially for only part of the radially outer surface 33 of the driving device 30.

A tyre test sample 100 is placed at the lowermost portion of the radially inner surface 21 of the annular drum 20.

In the exemplary embodiment shown in the attached figures, the tyre test sample 100 is a small disk-shaped test specimen, more preferably a Grosch wheel, having, on the radially outer surface thereof, an annular strip made of an elastomeric material identical to that of the tread band of a tyre to be tested.

As shown in figures 2 and 3, the tyre test sample 100 is removably mounted on a wheel support 101 rotatable about a rotation axis R parallel to the drum rotation axis X.

As shown in figures 2 and 4, a driving device 40 is arranged close to the lower portion of the annular drum 20 to drive in rotation the tyre test sample 100 about the rotation axis R under controlled running conditions. Accordingly, the driving device 20 can accelerate or brake the tyre test sample 100 with respect to the annular drum 20 or can provide the tyre test sample 100 with a rotation speed equal to the rotation speed of the annular drum 20.

In the exemplary embodiment shown in the attached figures, the second driving device 40 is a motorized driving device fixedly mounted on a hexapod 150 which, in turn, is fixedly attached to the support plate 201 on one side of the annular drum 20.

As shown in figure 3, in order to avoid vertical movements of the annular drum 20 in operation, an abutment wheel 70 is provided in a radially inner position of the annular drum 20 at the lower portion of the annular drum 20. The abutment wheel 70 is in contact with a lowermost portion 21* of the radially inner surface 21 of the annular drum 20.

Preferably, the abutment wheel 70 is an idle wheel which rotates about its rotation axis (not shown) during rotation of the annular drum 20 about the drum rotation axis X while contacting the radially inner surface 21 of the annular drum 20.

As shown in figure 4, the abutment wheel 70 is supported by a vertical plate 71 arranged, with respect to the annular drum 20, at the same side where the driving device 40 and the hexapod 150 are arranged. The vertical plate 71, and thus the abutment wheel 70, is placed below the rotation axis R of the tyre test sample 100.

The abutment wheel 70 is arranged on the opposite side of the vertical plate 71 with respect to the annular shoulder 25b of the annular drum 20 such that the annular shoulder 25b is clamped between the abutment wheel 70 and the vertical plate 71.

In some embodiments as the one shown in the attached figures, a device 80 is arranged in a radially inner position of the annular drum 20 to supply specific elements on the radially inner surface 21 of the annular drum 20 and/or to remove specific elements from the radially inner surface 21 of the annular drum 20.

The device 80 can be for example a water or snow supply device, or a dust/debris supply device, or a suction device configured to remove possible dust/debris from the radially inner surface 21, or a laser device for cleaning purposes.

As shown in figure 3 and 4, the device 80 is supported by a respective supporting member 81 arranged, with respect to the annular drum 20, at the same side where the driving device 40 and the hexapod 150 are arranged.

Appropriate members (not shown) are provided close to the annular drum 20 and on the same side of the supporting member 81 to supply the abovementioned specific elements to the device 80 or remove the abovementioned specific elements from the device 80.

In the exemplary embodiment shown in the herewith attached figures a camera 90 is arranged in a radially inner position of the annular drum 20. The camera 90 points at the radially outer surface of the tyre test sample 100 and comprises a shutter (not shown) which opens periodically with a predetermined shutter frequency depending on the rotation speed of the annular drum 20.

A flash light source (not shown) can be provided to emit flash light with a frequency matching the shutter frequency of the camera 90.

As shown in figure 3 and 4, the camera 90 is supported by a respective supporting member 91 arranged, with respect to the annular drum 20, at the same side where the driving device 40 and the hexapod 150 are arranged.

Other devices (not shown) can also be provided in a radially inner position of the annular drum 20, like for example measuring devices configured to check the quality of the radially inner surface 21 of the annular drum 20 and/or of the radially outer surface of the tyre test sample 100 and/or the quantity and/or height of the possible specific elements provided on the radially inner surface 21 of the annular drum 20.

Furthermore, an external brake mechanism can be provided for stopping or slowing down the rotation of the annular drum 20 about the drum rotation axis X. The external brake mechanism can acts directly on the annular drum 20 or on the driving device 30.

For example, the external brake mechanism can comprise a brake caliper configured to couple with the radially outer surface 23 of the annular drum 20 or a disk brake or cylinder pushing pad configured to press axially against an the annular drum.

In other embodiments not shown, a camera can be provided outside the outer case 200 to allow visual access inside the outer case 200 in those case where, for example, the presence of persons close to the testing apparatus 10 is not allowed or suggested for security reasons and the process carried out by the testing apparatus 10 must be controlled remotely.

As discussed above, the testing apparatus 100 is used to perform tests by which parameters correlated to the interaction between a tyre and a road surface can be estimated under conditions similar to real road surface conditions and real driving conditions.

The real interaction between tyre and road surface is simulated by providing an interaction between the tyre test sample 100 and the radially inner surface 21 of the annular drum 20. Such an interaction is obtained by driving the tyre test sample 100 in rotation on the radially inner surface 21 of the annular drum 20 while the annular drum is driven in rotation about the drum rotation axis X. Appropriate sensors and data acquisition systems are provided to collect critical parameters during mutual rotation of the tyre test sample 100 and the annular drum 20.

The present invention has been described with reference to some preferred embodiments. Various modifications can be made to the embodiments described above, still remaining within the scope of protection of the invention as defined by the following claims.

## Claims

1. Testing apparatus (10) for estimating parameters correlated to the interaction between a tyre and a surface, comprising:
- an annular drum (20) rotatable about a drum rotation axis (X) and having a radially inner surface (21);
- a first driving device (30) configured to drive in rotation the annular drum (20) about the drum rotation axis (X), the first driving device (30) having a rotation axis (Y) extending in a radially outer position with respect to the annular drum (20);
- a tyre test sample (100) arranged on said radially inner surface (21);
- a second driving device (40) configured to drive in rotation the tyre test sample (100) on said radially inner surface (21) under controlled running conditions.

2. Testing apparatus (10) according to claim 1, wherein the first driving device (30) rotates about its rotation axis (Y) in a rotation direction opposite the rotation direction of the annular drum (20) about the drum rotation axis (X).

3. Testing apparatus (10) according to claim 1 or 2, wherein the annular drum (20) comprises, on the radially inner surface (21) thereof, an annular track (22) made of an abrasive material and the tyre test sample (100) is arranged on said annular track (22).

4. Testing apparatus (10) according to any one of the previous claims, comprising a hexapod (150) connected to the second driving device (40).

5. Testing apparatus (10) according to any one of the previous claims, wherein the first driving device (30) comprises, on a radially outer surface (33) thereof, a first annular gear (38) and the annular drum (20) comprises, on a radially outer surface (23) thereof, a second annular gear (28), the first annular gear (38) and the second annular gear (28) being mutually engaged.

6. Testing apparatus (10) according to any one of the previous claims, comprising a first rolling bearing (50) in contact with a radially outer surface (23) of the annular drum (20) and having a rotation axis (Z) extending in a radially outer position with respect to the annular drum (20).

7. Testing apparatus (10) according to claim 6, wherein the first rolling bearing (50) comprises first axially opposed shoulders (51a, 51b) in abutment against opposed axial surfaces (24a, 24b) of the annular drum (20).

8. Testing apparatus (10) according to claim 6 or 7, comprising a second rolling bearing (60) in contact with the radially outer surface (23) of the annular drum (20), the second rolling bearing (60) being arranged on the opposite side of the first rolling bearing (50) with respect to the annular drum (20) and having a rotation axis (W) extending in a radially outer position with respect to the annular drum (20).

9. Testing apparatus (10) according to claim 8, wherein the second rolling bearing (60) comprises second axially opposed shoulders (61a, 61b) in abutment against opposed axial surfaces (24a, 24b) of the annular drum (20).

10. Testing apparatus (10) according to any one of the previous claims, wherein the annular drum (20) comprises axially opposed annular shoulders (25a, 25b) projecting toward the drum rotation axis (X) and wherein the radially inner surface (21) of the annular drum (20) is arranged between the axially opposed annular shoulders (25a, 25b).

11. Testing apparatus (10) according to any one of the previous claims, comprising an abutment wheel (70) in contact with a lowermost portion (21*) of the radially inner surface (21) of the annular drum (20).

12. Testing apparatus (10) according to any one of the previous claims, comprising at least one further device (80) arranged in a radially inner position of the annular drum (20).

13. Testing apparatus (10) according to any one of the previous claims, comprising a camera (90).

14. Testing apparatus (10) according to any one of the previous claims, comprising an outer case (200).

15. Testing apparatus (10) according to claim 14, comprising at least one additional device (300) configured to provide a controlled climate inside the enclosed outer case (200).
